# NOUVEAU FASCICULE DE BREVET EUROPEEN

(11) **EP 0 602 147 B2**
(45) Date de publication et mention de la décision concernant l'opposition: **06.12.2000**
(45) Mention de la délivrance du brevet: 26.04.1995
(21) Numéro de dépôt: 92919307.6
(22) Date de dépôt: 31.08.1992
(51) Int. Cl.: A23G 9/26, A23G 9/28, A23G 9/02

(54) **CONFISERIE COMPOSITE A CROQUER A BASE DE PRODUIT GLACE ET SON PROCEDE D'OBTENTION**
KOMPOSIT RIEGELKONFEKTION AUF BASIS EINES GEFRORENEN PRODUKTES UND HERSTELLUNGSVERFAHREN
FROZEN CRUNCHY COMPOSITE CONFECTION AND PROCESS FOR ITS PRODUCTION

(30) Priorité: 02.09.1991 FR 9110825
(43) Date de publication de la demande: 22.06.1994
(73) Titulaire: SOFRACO, F-86220 Dange-Saint-Romain (FR)
(72) Inventeur: BRUDER, Bernard, F-86210 Bonneuil-Matours (FR)
(74) Mandataire: CABINET BONNET-THIRION
(86) Numéro de dépôt international: FR9200834
(87) Numéro de publication internationale: WO9304592

(56) Documents cités:
- EP-A- 0 322 469
- FR-A- 775 375
- FR-A- 1 233 421
- FR-A- 1 335 999
- GB-A- 347 886
- US-A- 1 774 708
- US-A- 1 947 010
- US-A- 2 004 863
- US-A- 2 191 352
- US-A- 2 217 700
- US-A- 2 248 448
- US-A- 2 564 049
- US-A- 2 752 867
- US-A- 3 186 852
- US-A- 3 228 775
- US-A- 3 472 181
- US-A- 3 512 485
- US-A- 3 518 091
- US-A- 4 020 188
- US-A- 4 171 380
- US-A- 4 580 476
- Unilever Cornetto
- Ice cream cookie sandwich, USA, 1991
- Ice cream sandwich, USA, 1991
- Iceberge, Ireland, 1991
- Cucciolone, Greece and Italy, 1991

## Description

La présente invention concerne un bâtonnet glacé à croquer à base de produit glacé et son procédé d'obtention. Plus particulièrement l'invention concerne un bâtonnet glacé à croquer du genre comprenant un bloc de produit glacé (sorbet ou crème glacée) recouvert d'une enveloppe d'enrobage. Elle concerne aussi un procédé de fabrication d'un tel bâtonnet glacé.

Il existe plusieurs présentations pour les confiseries à base de crème glacée. Les plus connues et les plus répandues sont, soit du type où l'enveloppe d'enrobage consiste en une matière grasse du genre chocolat à laquelle sont additionnés différents ingrédients ou parfums tels que pulpes ou parcelles de fruits secs ou frais, d'arachides, de noix, de noisettes, essences aromatiques du type alimentaire, etc.., soit du type où l'enveloppe d'enrobage consiste en une couche de pâtisserie croustillante du type biscuit gaufre ou gaufrette, comme celle décrite dans la demande de brevet français 2 491 301.

On sait par ailleurs que pour préserver les qualités d'une enveloppe d'enrobage en pâtisserie, une solution consiste à disposer à l'interface entre la pâtisserie et le produit glacé et/ou également sur l'extérieur de la pâtisserie, une couche isolante à base de matière grasse du genre chocolat, comme décrit notamment dans les documents GB 347 886, FR 1 335 999 et DE 510 578.

Quelle que soit leur structure ou leur présentation, il est vrai qu'au cours de la consommation de ces confiseries il arrive très fréquemment que la partie glacée qu'elles comprennent laisse une impression désagréable lors d'un vif contact avec les dents, si bien que parmi les consommateurs il en est qui, n'aimant pas mordre dans un volume glacé, préfèrent attendre que le produit se réchauffe ce qui est au détriment du plaisir auquel on s'attend, à savoir, consommer une confiserie dite "rafraîchissante".

L'invention se propose de remédier à ce désagrément en fournissant un bâtonnet glacé à croquer dont la caractéristique est de procurer, en le consommant, une première sensation de mordre dans une substance à température ambiante, puis d'atteindre le moins brutalement possible la phase plus froide du produit glacé.

Ainsi le produit selon l'invention est un bâtonnet glacé composite à croquer selon la revendication 1.

Le bâtonnet glacé ainsi réalisé présente l'avantage de préserver la pâtisserie contre son humidification par le produit glacé. Le consommateur mordant dans cette pâtisserie n'aura pas au niveau des dents la sensation désagréable de froid intense et de dureté dues à la présence de cristaux de glace, mais la sensation de mordre dans une substance non agressive du point de vue thermique. De plus, la pâtisserie conservera ses propres propriétés par exemple de moelleux ou de croustillant. La confiserie sera ainsi consommable immédiatement sans avoir à attendre un éventuel réchauffement et ramollissement de la pâtisserie.

Grâce à l'épaisseur de pâtisserie, du même ordre de grandeur que celle du bloc de produit glacé, lorsque le consommateur mord dans le bâtonnet glacé, ses dents n'entrent pas brutalement et immédiatement au contact d'un volume important de produit glacé mais franchissent d'abord un volume notable non agressif.

Suivant d'autres caractéristiques :
- La pâtisserie est enrobée totalement d'une couche isolante à base de matière grasse de type chocolat.
- L'épaisseur totale de la pâtisserie peut être sensiblement égale à celle du bloc de produit glacé suivant au moins une dimension du bâtonnet glacé.
- Le bâtonnet glacé est muni d'un bâtonnet de préhension.
- La pâtisserie peut être de préférence croustillante. Elle peut être à base de tous types de céréales additionnées ou non de divers ingrédients ou parfums.
- La couche isolante à base de matière grasse du genre chocolat peut être additionnée d'ingrédients condiments et/ou parfums du type pulpes ou parcelles de fruits, d'arachides, de noix, de noisettes et analogues, essences aromatiques alimentaires et analogues.

En enrobant l'extérieur de la pâtisserie, on la préserve également contre l'humidité présente dans l'atmosphère ambiante.

L'invention couvre aussi le procédé d'obtention d'un tel bâtonnet glacé.

Un premier mode de réalisation du procédé consiste à réaliser un bloc de produit glacé ayant le volume, l'épaisseur et la forme désirés et à insérer ce bloc dans une structure en pâtisserie formant réceptacle de même forme intérieure, une couche isolante à base de matière grasse du genre chocolat étant disposée au moins à l'interface entre la pâtisserie et le bloc de produit glacé.

Un second mode de réalisation du procédé d'obtention d'un bâtonnet glacé consiste à revêtir au moins la paroi intérieure d'un réceptacle en pâtisserie d'une couche isolante à base de matière grasse, genre chocolat, et à introduire dans le réceptacle ainsi préparé une quantité appropriée de produit à glacer constituant après congélation le bloc final de produit glacé.

Selon des caractéristiques préférées supplémentaires, il est prévu de revêtir l'extérieur de la pâtisserie d'une couche isolante à base de matière grasse, soit en enrobant simultanément les faces extérieure et intérieure de la pâtisserie, soit en introduisant dans le procédé une étape supplémentaire au cours de laquelle on enrobe l'extérieur de la pâtisserie.

D'autre part, pour faciliter la préhension, un bâtonnet saillant est inséré au cours de la réalisation du bloc de produit glacé.

Pour placer la couche isolante à l'interface entre la pâtisserie et le bloc de produit glacé, on peut enrober le bloc de produit glacé par immersion dans une matière grasse d'enrobage à l'état fluide et faisant prise au contact du bloc et on recouvre ensuite le produit ainsi réalisé d'une enveloppe de pâtisserie choisie en faisant adhérer celle-ci sur les faces extérieures du produit. On peut encore enrober l'intérieur de l'enveloppe de pâtisserie et introduire ensuite le bloc de produit glacé.

D'autres caractéristiques et les avantages de l'invention ressortiront plus clairement de la description qui va suivre faite en regard des dessins annexés sur lesquels :
- la figure 1 est un schéma illustratif du procédé de réalisation classique de confiseries du genre bâtonnets glacés;
- la figure 2 est un schéma illustratif d'un mode de réalisation de ce même genre de bâtonnets glacés selon l'invention ;
- la figure 3 est une vue analogue à la figure 2 illustrant un autre mode de réalisation ;
- la figure 4 est une vue analogue illustrant encore un autre mode de réalisation ;
- la figure 5 est une vue schématique en coupe transversale, d'un produit fini selon l'invention.

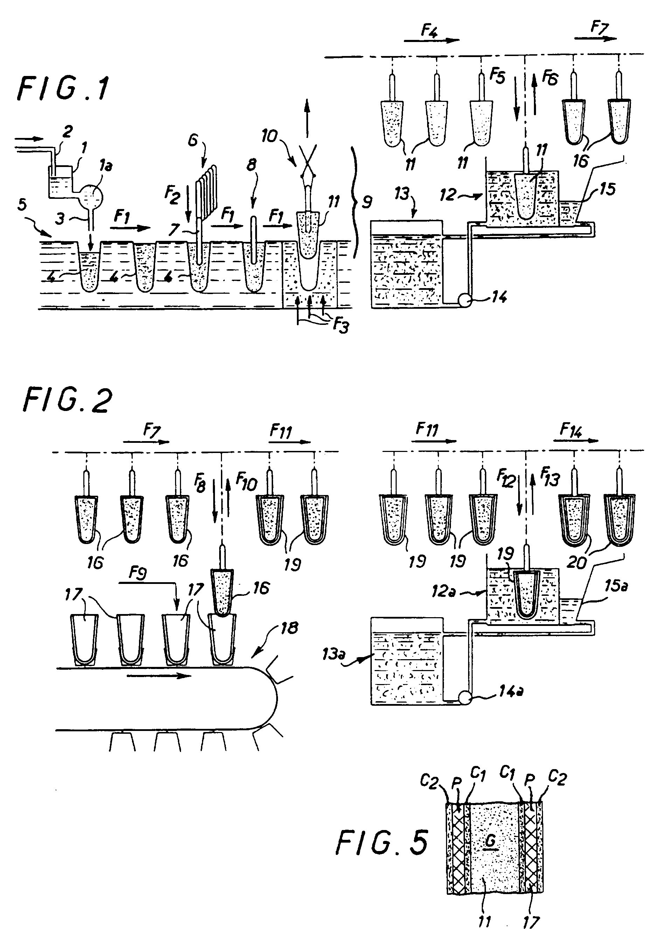

En se référant à ces dessins, on a représenté sur la figure 1 le schéma illustrant la façon classique utilisée pour la réalisation de bâtonnets glacés. Un réservoir 1, reçoit par la canalisation 2, le produit à glacer la (sorbet, crème glacée). Par l'intermédiaire d'un dispositif doseur 3 la quantité voulue de ce produit est distribuée dans des moules ou poches de congélation 4 de toutes formes désirées plongées dans un bain de saumure froide 5 (à -40°C par exemple) et y circulant dans le sens des flèches F1. Dans un stade intermédiaire ces moules se présentent à un poste de présentation 6 de bâtonnets de préhension 7 (en bois ou en matière plastique) qui sont insérés dans le sens de la flèche F2 dans lesdits moules, en laissant une partie saillante émergeant (comme représenté en 8) pour servir ultérieurement à la préhension. Les moules arrivent ensuite au poste de démoulage 9 qui comporte un apport de calories autour de chaque moule (flèches F3) en quantités juste suffisantes pour permettre, avec des moyens de préhension mécaniques 10, l'extraction de chaque bloc 11 dont les surfaces extérieures légèrement réchauffées glissent facilement le long des surfaces internes de chaque moule. C'est l'opération de démoulage.

Cette opération terminée on achemine chacun des blocs 11 (flèches F4) vers un poste d'enrobage 12 d'une matière grasse ayant la consistance et la fluidité voulues, par exemple à base de chocolat. Cet enrobage s'opère ici par immersion en plongeant et en retirant ces produits (flèches F5 - F6) dans un bain contenant ladite matière grasse d'enrobage à base de chocolat du type chocolat noir, chocolat blanc, chocolat au lait, additionnés ou non d'ingrédients divers tels que, par exemple, noisettes hachées, noix de coco rapée, riz soufflé, pulpes de fruits secs ou frais etc.., ou de diverses essences telles que de vanille, de café, ou autres parfums aromatiques de qualité alimentaire etc... Ce bain est alimenté à partir d'une cuve de préparation ou de mélange 13 au moyen de la pompe de circulation 14. Un compartiment 15 d'égouttage et/ou de contrôle de l'épaisseur de la couche de chocolat est prévu en aval de cette opération d'enrobage. Le produit 16 ainsi réalisé est ensuite acheminé (flèche F7) vers un poste de conditionnement et de mise sous sachet.

Mais conformément à l'invention et suivant un mode de réalisation, l'opération de contrôle d'épaisseur et d'égouttage rappelée ci-dessus est suivie d'une opération, illustrée à la figure 2, consistant à insérer le produit 16 dans des réceptacles ou enveloppes 17 réalisés en pâtisserie, par exemple en gaufrette, ayant toute forme désirée et une consistance croustillante, c'est-à-dire présentant un minimum d'humidité. Pour ce faire le produit 16 est présenté au regard dudit réceptacle et introduit dans celui-ci (flèche F8) par tout moyen approprié. De leur côté chacun de ces réceptacles est amené en position de remplissage par exemple par un tapis transporteur à godets 18. Avant insertion du produit 16 on peut également prévoir l'addition d'autres ingrédients du type miel, caramel etc.. (par l'intermédiaire de dispositifs bien connus à cet effet schématisés par la flèche F9). Le produit 16 avec son enveloppe 17, constituant maintenant le produit 19 est repris (flèche F10) pour être à son tour envoyé (flèche F11), soit vers le poste de conditionnement, soit vers un second stade d'enrobage se faisant, comme précédemment décrit, par exemple par immersion (flèche F12) dans un bain de substance d'enrobage 12a avec sa cuve 13a, sa pompe de circulation 14a, son poste d'égouttage ou de contrôle de l'épaisseur 15a. Cette substance d'enrobage pourra être identique à celle de l'opération d'enrobage précédemment décrite avec référence à la figure 1 ou bien elle pourra être différente. Le produit en résultant 20 est retiré de son bain (flèche F13) et acheminé (flèche F14) vers le poste de conditionnement et de mise sous sachet où, de façon usuelle le produit fini (tel que 20) est placé sur une feuille de matériau d'emballage, laquelle, après avoir été repliée et scellée successivement par une soudure longitudinale et une soudure transversale, puis sectionnée, constituera un sachet contenant une portion individuelle d'un produit selon l'invention.

Le produit fini selon l'invention se présente avantageusement de façon telle que l'épaisseur totale de la pâtisserie est du même ordre de grandeur que l'épaisseur du bloc de produit glacé suivant au moins une dimension de la confiserie.

A la figure 5, on a représenté en coupe un produit fini selon l'invention. Il comporte un bloc de produit glacé d'épaisseur G entouré d'une pâtisserie d'épaisseur P, et, à l'interface entre le produit glacé et la pâtisserie, la couche C₁ de matière isolante à base de matière grasse du genre chocolat. Selon ce mode de réalisation la pâtisserie est aussi revêtue sur la face extérieure d'une couche isolante C₂.

Selon un mode de réalisation préféré de l'invention, l'épaisseur totale de la pâtisserie est sensiblement égale à celle du bloc de produit glacé. Autrement dit, en coupe transversale suivant au moins une dimension de la confiserie, la somme des épaisseurs de pâtisserie (P+P) enveloppant le bloc de produit glacé est de préférence égale à l'épaisseur G de ce bloc de produit glacé. Cependant l'expression "du même ordre de grandeur" utilisée ci-dessus indique que ces proportions entre les épaisseurs de pâtisserie et de produit glacé peuvent être modifiées de façon notable.

On considère que l'effet recherché est notable avec une épaisseur totale de pâtisserie (P+P) de 20 à 25 % par rapport à celle du bloc de produit glacé, selon bien entendu la nature de la pâtisserie.

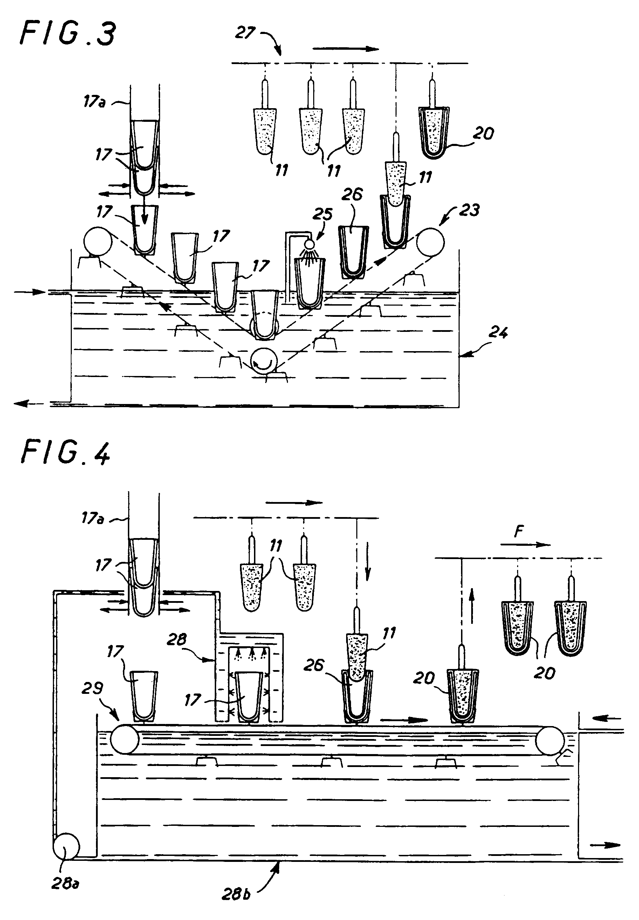

Suivant une autre variante du procédé de réalisation du bâtonnet glacé selon l'invention, illustré à la figure 3, les réceptacles en pâtisserie 17 sont acheminés à partir du magasin 17a par un transporteur 23 dans un bain d'enrobage 24 qui réalise la couche externe de matière grasse désirée. Par un moyen de pulvérisation 25 adapté à intervenir à l'intérieur de chaque réceptacle à la sortie dudit bain 24, on réalise la couche interne d'enrobage donnant ainsi un réceptacle 26 qui est acheminé par le transporteur 23 en regard d'un moyen de présentation et d'insertion 27 d'un bloc de produit glacé 11 pour donner un produit fini 20 selon l'invention.

On peut prévoir au fond du réceptacle 17 un perçage de sorte qu'après pulvérisation pour réaliser la couche interne d'enrobage C₁, le surplus de matière grasse d'enrobage puisse être évacué par égouttage à la sortie du bain, lorsque le réceptacle 26 est acheminé par le transporteur.

Suivant encore un autre mode de réalisation (Fig. 4) les réceptacles 17 en provenance de leur magasin 17a sont soumis à une double opération de pulvérisation interne et externe dans un tunnel 28 puis, les réceptacles ainsi enrobés 26, sont dirigés vers le poste d'insertion des blocs glacés 11, comme décrit précédemment, leur déplacement se faisant au moyen du transporteur 29. Les moyens de pulvérisation dans le tunnel 28 sont alimentés en matière d'enrobage par une pompe 28a alimentée par un réservoir 28b. Comme précédemment le produit fini 20 est envoyé au conditionnement (flèche F).

Les réceptacles à base de pâtisserie du type pâte à biscuit, gaufre ou gaufrette sont, comme déjà indiqué, obtenus à partir de matières premières, céréales et ingrédients divers. On signalera en particulier les formules à base de farine de blé, orge, seigle et sarazin, sucres, sels, amidons (riz, pommes de terre, maïs), oeufs et eau.

En tout état de cause, le but poursuivi par l'invention est obtenu en portant une attention tout à fait particulière à l'épaisseur de l'enveloppe de pâtisserie par rapport à celle de produit glacé, qui participe, étant donnée la structure générale de la confiserie, à un équilibre agréable de sensations de chaud et de froid au cours de sa consommation. De plus le caractère "croquant" est ressenti tout au long de cette consommation, les couches d'enrobages préservant les caractéristiques physiques de la pâtisserie, par exemple son croustillant ou son moelleux.

La confiserie selon l'invention peut être de toute forme connue et appropriée, par exemple cylindrique ou parallélépipédique.

## Revendications

1. Bâtonnet glacé à croquer comportant un bloc de produit glacé (G) muni d'un bâtonnet de préhension (7) et enrobé d'une couche isolante (C₁) à base de matière grasse du genre chocolat, caractérisé en ce que ledit bloc de produit glacé (G) muni de sa couche isolante (C₁) est entouré, suivant le sens longitudinal du bâtonnet glacé d'une pâtisserie formant coquille, l'épaisseur totale (P+P) de ladite pâtisserie représentant au moins 20 % de l'épaisseur du bloc de produit glacé (G) suivant ledit sens longitudinal du bâtonnet glacé et en ce que l'extérieur de la pâtisserie est enrobé d'une couche isolante (C₂) à base de matière grasse du genre chocolat.

2. Bâtonnet glacé selon la revendication 1, caractérisé en ce que l'épaisseur totale (P+P) de la pâtisserie est égale à celle du bloc de produit glacé suivant ladite dimension du bâtonnet glacé.

3. Bâtonnet glacé selon la revendication 1 ou 2, caractérisé en ce que ladite pâtisserie est croustillante.

4. Bâtonnet glacé selon l'une des revendications précédentes, caractérisé en ce que ladite pâtisserie est à base de céréales additionnées d'ingrédients et/ou de parfums.

5. Bâtonnet glacé selon l'une des revendications précédentes, caractérisé en ce que la matière grasse d'enrobage est additionnée d'ingrédients et/ou parfums.

6. Bâtonnet glacé selon la revendication 1, caractérisé en ce que la pâtisserie a une forme intérieure complémentaire de celle du bloc de produit glacé (G).

7. Procédé d'obtention d'une confiserie à croquer selon la revendication 1, du genre où l'on réalise un bloc de produit glacé (G) muni d'un bâtonnet de préhension (7), caractérisé en ce que, dans une étape supplémentaire, on insère ledit bloc de produit glacé (G) à l'aide de son bâtonnet de préhension (7) dans une structure en pâtisserie de même forme intérieure formant réceptacle (17), une couche isolante (C₁) à base de matière grasse du genre chocolat ayant été disposée au préalable au moins à l'interface entre la pâtisserie (17) et le bloc de produit glacé (G), l'introduction du bloc de produit glacé (G) dans ledit réceptacle en pâtisserie (17) s'opérant avant que ladite matière grasse ne soit durcie, et en ce qu'on enrobe l'extérieur de la pâtisserie d'une couche de matière grasse, isolante du genre chocolat.

8. Procédé selon la revendication 7, caractérisé en ce qu'avant son introduction dans ledit réceptacle en pâtisserie (17), ledit bloc de produit glacé (G) maintenu par son bâtonnet de préhension (7) est enrobé de matière grasse du genre chocolat à l'état fluide.

9. Procédé selon la revendication 7, caractérisé en ce qu'avant l'introduction du bloc de produit glacé (G) dans le réceptacle en pâtisserie (17), ce dernier est revêtu d'une couche intérieure de matière grasse du genre chocolat.

10. Procédé selon la revendication 7, caractérisé en ce qu'on enrobe de matière grasse du genre chocolat simultanément l'intérieur et l'extérieur de la pâtisserie avant l'introduction du bloc de produit glacé.

11. Procédé selon l'une des revendications 7 à 10, caractérisé en ce que l'application de matière grasse se fait par pulvérisation.

12. Procédé selon l'une des revendications 7 à 11, caractérisé en ce que l'application de matière grasse se fait par trempage dans un bain de matière grasse à l'état fluide.

13. Installation pour la mise en oeuvre du procédé selon l'une des revendications 7 à 12, du genre comportant un posté de réalisation d'un bloc de produit glacé muni d'un bâtonnet de préhension, ledit bloc de produit glacé étant transporté d'un poste à l'autre de l'installation à l'aide de son bâtonnet de préhension, et un poste d'enrobage de matière grasse du genre chocolat, caractérisée en ce qu'elle comporte en outre un poste d'introduction du bloc de produit glacé dans un réceptacle en pâtisserie de forme intérieure correspondante.

14. Installation selon la revendication 13, caractérisée en ce que ledit poste d'enrobage est constitué par un bain de matière grasse du genre chocolat à l'état fluide et un moyen pour y plonger et ressortir le bloc de produit glacé maintenu par son bâtonnet de préhension.

15. Installation selon la revendication 14, caractérisée en ce qu'elle prévoit l'acheminement du bloc de produit glacé au poste d'enrobage puis au poste d'introduction dans le réceptacle en pâtisserie et à nouveau au poste d'enrobage.

## Claims

1. An edible frozen stick comprising a block of frozen product (G) provided with a gripping stick (7) and covered by an insulating layer (C₁) based on fatty matter of the chocolate kind, characterised in that said block of frozen product (G) provided with its insulating layer (C₁) is surrounded, in the longitudinal direction of the frozen stick, by a pastry material which forms a shell, the total thickness (P+P) of said pastry material representing at least 20% of the thickness of the block of frozen product (G) in said longitudinal direction of the frozen stick, and in that the outside of the pastry material is covered by an insulating layer (C₂) based on fatty matter of the chocolate kind.

2. A frozen stick according to claim 1, characterised in that the total thickness (P+P) of the pastry material is equal to that of the block of frozen product along said dimension of the frozen stick.

3. A frozen stick according to claim 1 or claim 2, characterised in that said pasty material is crunchy.

4. A frozen stick according to one of the preceding claims, characterised in that said pastry material is based on cereals with the addition of ingredients and/or flavourings.

5. A frozen stick according to one of the preceding claims, characterised in that the fatty coating matter has ingredients and/or flavourings added thereto.

6. A frozen stick according to claim 1, characterised in that the pastry material is of an internal shape which is complementary to that of the block of frozen product (G).

7. A process for producing an edible confection according to claim 1, of the kind in which a block of frozen product (G) provided with a gripping stick (7) is formed, characterised in that in an additional step said block of frozen product (G) is inserted by means of its gripping stick (7) into a structure of pastry material of the same internal shape forming a receptacle (17), an insulating layer (C₁) based on fatty matter of the chocolate kind having been previously disposed at least at the interface between the pastry material (17) and the block of frozen product (G), the operation of introducing the block of frozen product (G) into said receptacle of pastry material (17) being effected before said fatty matter is hardened, and in that the outside of the pastry material is covered with a layer of insulating fatty matter of the chocolate kind.

8. A process according to claim 7, characterised in that prior to its introduction into said receptacle of pastry material (17) said block of frozen product (G) which is held by its gripping stick (7) is coated with fatty matter of the chocolate kind in the fluid state.

9. A process according to claim 7, characterised in that prior to the introduction of the block of frozen product (G) into the receptacle of pastry material (17), this latter is coated with an internal layer of fatty matter of the chocolate kind.

10. A process according to claim 7, characterised in that the inside and outside of the pastry material are simultaneously covered with fatty matter of the chocolate kind before the introduction of the block of frozen product.

11. A process according to one of claims 7 to 10, characterised in that the application of fatty matter is effected by spraying.

12. A process according to one of claims 7 to 11, characterised in that the application of fatty matter is effected by dipping in a bath of fatty matter in the fluid state.

13. An installation for carrying out the process according to one of claims 7 to 12, of the type comprising a station for producing a block of frozen product provided with a gripping stick, said block of frozen product being transported from one station of the installation to the other by means of its gripping stick, and a station for producing a coating of fatty matter of the chocolate kind, characterised in that it further comprises a station for introducing the block of frozen product into a receptacle of pastry material of a corresponding internal shape.

14. An installation according to claim 13, characterised in that said coating station is formed by a bath of fatty matter of the chocolate kind in the fluid state and a means for immersing therein and removing therefrom the block of frozen product which is held by its gripping stick.

15. An installation according to claim 14, characterised in that it provides for movement of the block of frozen product to the coating station and then to the station for introducing the block into the receptacle of pastry material and again to the coating station.

## Patentansprüche

1. Gefrorenes Stäbchen zum Knabbern mit einem Block aus einem gefrorenen Produkt (G), der mit einem Greifstäbchen (7) versehen ist und mit einer isolierenden Schicht (C₁) auf der Basis einer fettigen schokoladigenartigen Masse umgeben ist,
dadurch **gekennzeichnet**,
daß der Block aus einem gefrorenen Produkt (G), der mit seiner isolierenden Schicht (C₁) versehen ist, in Längsrichtung des gefrorenen Stäbchens mit einem Gebäck umgeben ist, das eine Schale bildet, wobei die Gesamtdicke (P+P) des Gebäcks mindestens 20% der Dicke des Blockes aus einem gefrorenen Produkt (G) in Längsrichtung des gefrorenen Stübchens beträgt und daß die Außenseite des Gebäcks mit einer isolierenden Schicht (C₂) auf der Basis einer fettigen schokoladenartigen Masse umgeben ist.

2. Gefrorenes Stäbchen nach Anspruch 1,
dadurch **gekennzeichnet**,
daß die Gesamtdicke (P+P) des Gebäcks gleich der des Blockes aus einem gefrorenen Produkt entlang der Dimension des gefrorenen Stäbchens ist.

3. Gefrorenes Stäbchen nach Anspruch 1 oder 2,
dadurch **gekennzeichnet**,
daß das Gebäck knusprig ist.

4. Gefrorenes Stäbchen nach einem der vorhergehenden Ansprüche,
dadurch **gekennzeichnet**,
daß das Gebäck auf Getreidebasis hergestellt und diesem Zutaten und / oder Aromate beigemischt sind.

5. Gefrorenes Stäbchen nach einem der vorhergehenden Ansprüche,
dadurch **gekennzeichnet**,
daß der fettigen Umhüllungsmasse Zutaten und / oder Aromate beigemischt sind.

6. Gefrorenes Stäbchen nach Anspruch 1,
dadurch **gekennzeichnet**,
daß das Gebäck eine Innenform besitzt, die zur Form des Blockes aus einem gefrorenen Produkt (G) komplementär ist.

7. Verfahren zur Herstellung eines Konfektes zum Knabbern nach Anspruch 1 von der Art, bei der man einen Block aus einem gefrorenem Produkt (G), der mit einem Greifstäbchen (7) versehen ist, verwirklicht,
dadurch **gekennzeichnet**,
daß in einem zusätzlichen Schritt der Block aus einem gefrorenein Produkt (G) mit Hilfe seines Greifstäbchens (7) in eine Gebäckanordnung von derselben Innenform, die eine Aufnahme (17) bildet, eingesetzt wird, wobei eine isolierende Schicht (C₁) auf der Basis einer fettigen schokoladenartigen Masse vorher zumindest auf eine Übergangsfläche zwischen dem Gebäck (17) und dem Block aus einem gefrorenen Produkt (G) aufgebracht worden ist, wobei das Einsetzen des Blocks aus einem gefrorenein Produkt (G) in die Aufnahme aus Gebäck (17) erfolgt, bevor die fettige Masse erhärtet ist und daß die Außenseite des Gebäcks noch mit einer isolierenden Schicht aus einer fettigen schokoladenartigen Masse umhüllt wird.

8. Verfahren nach Anspruch 7,
dadurch **gekennzeichnet**,
daß der an seinem Greifstäbchen (7) gehaltene Block aus einem gefrorenen Produkt (G) vor seinem Einsetzen in die Aufnahme aus Gebäck (17) mit einer fettigen schokoladenartigen Masse in flüssigem Zustand umhüllt wird.

9. Verfahren nach Anspruch 7,
dadurch **gekennzeichnet**,
daß vor dem Einsetzen des Blockes aus einem gefrorenem Produkt (G) in die Aufnahme aus Gebäck (17) die letztere mit einer Innenschicht aus einer fettigen schokoladenartigen Masse versehen wird,

10. Verfahren nach Anspruch 7,
dadurch **gekennzeichnet**,
daß gleichzeitig die Innenseite und die Außenseite des Gebäcks vor dem Einsetzen des Blockes aus einem gefrorenem Produkt mit einer fettigen schokoladenartigen Masse umhüllt werden.

11. Verfahren nach einem der Ansprüche 7 bis 10,
dadurch **gekennzeichnet**,
daß die Aufbringung der fettigen Masse durch Zerstäubung erfolgt.

12. Verfahren nach einem der Ansprüche 7 bis 11,
dadurch **gekennzeichnet**,
daß die Aufbringung der fettigen Masse durch Eintauchen in ein Bad aus einer fettigen Masse in flüssigem Zustand erfolgt.

13. Anlage zur Anwendung des Verfahrens nach einem der Ansprüche 7 bis 12 mit einer Station zur Herstellung eines Blockes aus einem gefrorenen Produkt, der mit einem Greifstäbchen versehen ist, wobei der Block aus einem gefrorenen Produkt von einer Station der Anlage zur nächsten mit Hilfe seines Greifstäbchens transportiert wird, und einer Station zur Umhüllung mit einer fettigen schokoladenartigen Masse,
dadurch **gekennzeichnet**,
daß sie weiterhin eine Station zum Einsetzen des Blockes aus einem gefrorenen Produkt in eine Aufnahme aus Gebäck mit einer entsprechenden Innenform umfaßt.

14. Anlage nach Anspruch 13,
dadurch **gekennzeichnet**,
daß die Umhüllungsstation durch ein Bad aus einer fettigen schokoladenartigen Masse in flüssigem Zustand und ein Mittel, um in dieses den Block aus einem gefrorenen Produkt an seinem Greifstäbchen gehalten hineinzutauchen und zurückzuziehen, gebildet ist.

15. Anlage nach Anspruch 14,
dadurch **gekennzeichnet**,
daß sie die Förderung des Blockes aus einem gefrorenem Produkt zur Umhüllungsstation, dann zur Station zum Einsetzen in die Aufnahme aus Gebäck und erneut zur Umhüllungsstation vorsieht.
